# EUROPEAN PATENT APPLICATION

(11) **EP 4 130 930 A1**
(43) Date of publication of application: **08.02.2023**
(21) Application number: 21189487.8
(22) Date of filing: 03.08.2021
(51) Int. Cl.: G06F 1/16, H04R 1/02

(54) **ELECTRONIC DEVICE WITH A MULTIPURPOSE METAL BRACKET**

(71) Applicant: BSH Hausgeräte GmbH, 81739 München (DE)
(72) Inventor: Ellwitz, Tom, 74549 Wolpertshausen (DE); Etzbach, Andrea, 80634 München (DE); Graus Almenar, Javier, 50002 Zaragoza (ES); Sagoo, Kiran Pal, 82256 Fürstenfeldbruck (DE)

(57) **Abstract**

An electronic device (100), in particular a docking station (100) and/or a smart speaker, is described, wherein the electronic device (100) comprises a main body (106) which comprises an acoustic chamber with one or more speaker drivers (108, 107) for rendering an audio signal. The electronic device (100) further comprises a panel-shaped front foot (105) which extends downwards from the main body (106) at a front side of the electronic device (100), and a panel-shaped rear foot (111) which extends downwards from the main body (106) at a rear side of the electronic device (100). Furthermore, the electronic device (100) comprises an electronics housing (121) which is located below the panel-shaped front foot (105) and the panel-shaped rear foot (111), such that the panel-shaped front foot (105) and the panel-shaped rear foot (111) form a roof for the electronics housing (121). In addition, the electronic device (100) comprises a metal bracket (200) which is located within the electronics housing (121), and an electronics board which is attached to the metal bracket (200).

## Description

The present document relates to an electronic device, in particular to a docking station and/or to a smart speaker, which may be used within a household, notably within a kitchen, to provide support regarding a household task such as cooking.

An electronic device, such as a smart speaker and/or a docking station, may be used within a household, notably within a kitchen, to provide support for a household task, such as cooking, to a user of the electronic device. The user may use the electronic device for playing back an audio signal (e.g., music or audio instructions for a recipe or an answer from a voice assistant).

The electronic device may be placed on the worktop of a kitchen, next to a user working (e.g., cooking) at the worktop. In this context, it may occur that the user bangs into the electronic device and damages the electronic device. The present document addresses the technical problem of providing a particularly stable and/or robust electronic device. The technical problem is solved by the independent claim. Preferred examples are described in the dependent claims.

According to an aspect, an electronic device, notably a docking station configured to dock a user device and/or a smart speaker, is described. The electronic device may be configured to be converted from a smart speaker into a smart display by docking a user device, such as a tablet or smartphone. The electronic device may be designed to be placed on a table or a worktop within a kitchen. Furthermore, the electronic device may be configured to hold a DIN A4 or DIN A5 sized user device (e.g., with a display size of up to 11 inches or 12 inches). For this purpose, the electronic device may comprise a back support.

The electronic device typically comprises at least one active acoustic speaker driver (notably a loudspeaker) which is configured to render an audio signal. The speaker driver may be located in an acoustic chamber formed by a main body of the electronic device. The acoustic chamber and/or the main body may have a cylindrical form. The main body may exhibit a longitudinal axis which may be oriented in parallel to the ground (e.g., a worktop) onto which the electronic device is placed. The main body may e.g., have a diameter between 4cm and 8cm. Furthermore, the main body may e.g., have a length along the longitudinal axis between 10cm and 25cm.

In addition, the electronic device may comprise one or more feet extending downwards from the main body and enabling the main body to be placed on the ground (e.g., a worktop). The one or more (panel-shaped) feet may extend along the longitudinal axis of the main body (e.g., from one end to the other end of the main body). The electronic device may exhibit a front foot at a front side of the electronic device (facing the user of the electronic device, when the user is using the electronic device). Alternatively, or in addition, the electronic device may exhibit a rear foot (at the rear side of the electronic device). By providing one or more feet, the electronic device may be placed on a ground in a stable manner.

The one or more feet may be configured to hold the main body elevated at an elevation distance from the ground. The elevation distance may e.g., be between 1cm and 15cm. By positioning the main body (which comprises one or more speaker drivers, e.g., loudspeakers) at a certain elevation distance from the ground, an electronic device having a high audio quality and intelligibility may be provided. Furthermore, by holding the main body elevated from the ground, the main body may be protected from liquids on the ground in an efficient and reliable manner.

As indicated above, the (elevated) main body may comprise one or more (active or passive) speaker drivers for rendering an audio signal. The one or more radiators are preferably oriented at least partially towards the ground. In particular, the one or more speaker drivers may be arranged such that a main emission direction of an audio signal that is emitted by the one or more speaker drivers is oriented towards the ground. By way of example, the main emission direction may form an angle with ground having a magnitude which is greater than 0°, notably greater than 20°.

By providing an electronic device having an elevated main body with one or more speaker drivers that are oriented towards the ground that the electronic device is standing on, the quality and the intelligibility of emitted audio signals may be increased, thereby increasing the comfort-of-use of the electronic device.

As indicated above, the electronic device may comprise a back support. The back support may extend upwards from the main body, enabling a user device to be placed in conjunction with and/or onto the electronic device. The back support may exhibit an angle between 45° and 75° relative to the ground that the electronic device is standing on. The back support may form a flat backplane which is at least partially in contact with the backside of a (flat) user device that is placed onto the electronic device. In other words, the back support may hold a user device from the back.

The electronic device may be designed such that the back support can be detached from the main body or attached to the main body by a user of the electronic device (e.g., using one or two hands). In particular, detaching and/or attaching may be performed without using a tool. As a result of this, a particularly comfortable electronic device may be provided.

Hence, an electronic device, in particular a docking station is described, wherein the electronic device comprises a main body with an acoustic chamber with one or more speaker drivers for rendering an audio signal.

Furthermore, the electronic device comprises a panel-shaped front foot which extends downwards from the main body at the front side of the electronic device, and a panel-shaped rear foot which extends downwards from the main body at the rear side of the electronic device. The rear foot may form an angle between 20° and 45° with the ground that the electronic device is standing on. The front foot may form an angle between 45° and 85° with the ground. As such, the front foot and the rear foot may form two sides of a triangle, and the ground may form the base of this triangle.

The electronic device may comprise an electronics housing which is located below the panel-shaped front foot and the panel-shaped rear foot, such that the panel-shaped front foot and the panel-shaped rear foot form a roof for the electronics housing. As such, the electronics housing may be located within the triangle that is formed by the front foot and the rear foot. The front foot and the rear foot may form (upper) walls of the electronics housing.

As indicated above, the main body may have a cylindrical form and may extend along a longitudinal axis from a first face to a second face. The longitudinal axis of the main body may be parallel to the ground that the electronic device is standing on. The rear foot may form a plane that has a total length along the longitudinal axis, extending from the first face to the second face. The electronics housing may have a length along the longitudinal axis, which is 80% or more of the total length, thereby providing a relatively large overall space for electronic components of the electronic device.

The electronic device comprises a metal bracket which is located within and/or enclosed by the electronics housing. Furthermore, the electronic device may comprise an electronics board which is attached to the metal bracket. The metal bracket may form a metallic surface which has a length along the longitudinal axis of 80% or more of the total length. Furthermore, the metallic surface may extend from the front foot to the rear foot. The electronic board may be attached to the metallic surface of the metal bracket. The metal bracket may e.g., be made out of steel, e.g., a steel sheet.

By providing an electronic device with a metal bracket, a particularly stable and robust electronic device may be provided. Furthermore, EMI (electromagnetic interference) and/or RFI (radio frequency interference) properties of the electronic device may be improved in an efficient manner. In addition, a selective coupling to a user device may be achieved in an efficient manner.

The metal bracket may comprise a front section for attaching the metal bracket to the front foot. Furthermore, the metal bracket may comprise a middle section to which the electronics board is attached. In addition, the metal bracket may comprise a rear section for attaching the metal bracket to the rear foot. By attaching the metal bracket to the front foot and the rear foot a particularly stable electronic device may be provided.

The middle section of the metal bracket may be oriented in parallel to the ground that the electronic device is standing on. On the other hand, the rear section of the metal bracket may be oriented in parallel to the rear foot. Hence, the metal bracket may exhibit different sections with different orientations, thereby further increasing the stability of the electronic device.

The metal bracket, in particular the middle section of the metal bracket, to which the electronics board may be attached, may be configured to act as a heat sink for heat generated by the electronics board during operation of the electronic device. For this purpose, the metal bracket, in particular the middle section of the metal bracket may have a material thickness of 2mm or more, or of 4mm or more. As a result of this, the reliability and robustness of the electronic device may be increased in an efficient manner.

The metal bracket, in particular the middle section of the metal bracket may be configured to act as a shield for electromagnetic and/or radio frequency interference for one or more electronic components on the electronics board. This may be achieved by making use of a planar metal bracket which covers a relatively large section (e.g., 50% or more) of the electronics housing.

The electronics board may be attached to the lower side of the metal bracket, in particular to the lower side of the middle section of the metal bracket, such that the electronics board is located between the metal bracket and the ground that the electronic device is standing on. As a result of this, electromagnetic shielding may be provided to the area above the electronics housing in an efficient manner.

The electronics board may comprise a transceiver which is configured to establish a wireless communication link with a user device (e.g., a smartphone or a tablet PC), which is placed above the roof of the electronics housing (e.g., which is placed on the back support of the electronic device). The metal bracket, in particular the middle section of the metal bracket may comprise an opening for the transceiver, that allows a wireless communication signal (notably a Bluetooth signal) which is transmitted by the transceiver to traverse the opening of the metal bracket towards the roof of the electronics housing.

As such, the electronic device may comprise a holder, notably a back support, extending upwards from the main body and enabling a handheld user device to be placed onto the electronic device. The electronics board may comprise a transceiver configured to establish a wireless communication link with a user device, which is placed on the electronic device. The metal bracket may be configured to perform beamforming for a wireless communication signal (e.g., a Bluetooth signal) which is transmitted by the transceiver. The beamforming may be performed into the direction towards the back support and/or towards the roof of the electronics housing (e.g., using the above-mentioned opening within the metal bracket). As a result of this, selective coupling to a user device may be achieved in a reliable and efficient manner.

The metal bracket, in particular the middle section of the metal bracket may comprise a guiding element which extends perpendicularly away from the (lower) surface of the metal bracket, in particular from the (lower) surface of the middle section of the metal bracket. The guiding element may comprise a hole for a power plug of the electronic device. Furthermore, the guiding element may be configured to block a power plug from being pushed too far into a power socket of the electronic device (which may damage the electronic device). By providing a guiding element on the metal bracket, the robustness of the electronic device may be increased further.

The metal bracket may be configured to lower the center of gravity of the electronic device towards the ground that the electronic device is standing on, compared to an electronic device which does not comprise the metal bracket. In particular, the metal bracket may have a weight of 200g or more, or of 400g or more. As a result of this, the stability of the electronic device may be improved.

As indicated above, the electronic device may comprise a back support extending upwards from the main body (at a non-perpendicular angle with respect to the ground that the electronic device is standing on) and enabling a handheld user device to be placed onto the electronic device. The center of gravity of the back support may be positioned at a gravity point (which is typically located between the front side of the electronic device (facing the user) and the rear side of the electronic device (at the back of the electronic device).

The metal bracket may be such that a higher fraction of the total weight of the metal bracket is located between the front side of the electronic device and the gravity point, than between the rear side of the electronic device and the gravity point. As such, the metal bracket may serve as a counterweight for a user device which is placed on the back support in a particularly efficient manner, thereby further increasing the stability of the electronic device.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a (smart) docking station in a perspective view;
Figure 1b shows an example docking station in a side view;
Figure 1c shows a front view of the docking station;
Figures 2a to 2c show different views of an example docking station comprising a metal bracket;
Figure 3a shows a side view of an example metal bracket; and
Figure 3b shows a perspective view of an example metal bracket.

As outlined above, the present document is directed at increasing the stability and the robustness of a docking station. The following aspects are described in the context of a docking station. It should be noted that these aspects are also applicable to an electronic device in general.

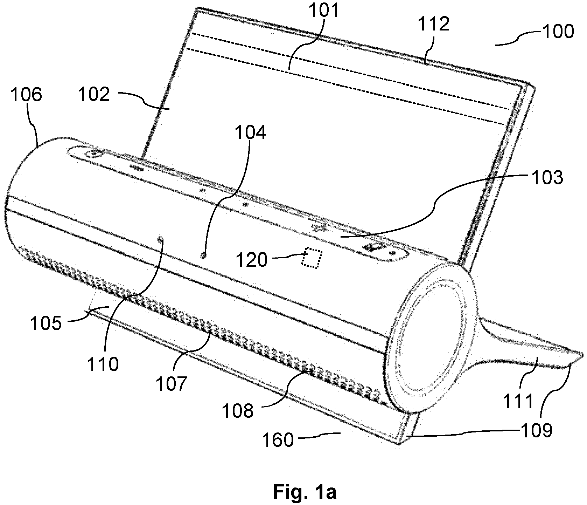

Figs. 1a to 1c show an example docking station 100. The (smart) docking station 100 comprises a main body 106, which may have a cylindrical form as illustrated in Fig. 1a. The main body 106 may comprise one or more electronic components such as a control unit 120, e.g., a microcontroller, of the docking station 100. Furthermore, the main body 106 may comprise a control panel 103 with one or more control elements, notably control buttons. The control panel 103 may enable a user to interact with the docking station 100, e.g., for speaker volume control or for quick touch interaction with the voice assistant (stop listening, start listening).

Alternatively, or in addition to a control panel 103, the docking station 100 may comprise a gesture sensor 104 (located e.g., on the main body 106), which is configured to sense gesture data regarding a (hand) gesture performed by a user of the docking station 100. The docking station 100 may be controlled in dependence of the gesture data (i.e., of the measurement data of the gesture sensor 104). In addition, the docking station 100 may comprise one or more light elements 150, notably light emitting diodes (LED) and/or an LED strip 151, e.g., for providing status information regarding the status of the docking station 100 to a user of the docking station 100.

The main body 106 may further comprise one or more active speaker drivers (which are also referred to herein as loudspeakers) 108 which are configured to emit an audio signal. The one or more loudspeakers 108 may be located at a face side and/or at a shell surface of the (cylindrical) main body 106 or of the (cylindrical) acoustic chamber comprised within the main body 106. The main body 106 may act as and/or may enclose an acoustic chamber for improving the sound quality of the one or more loudspeakers 108. In addition, the docking station 100 may comprise one or more (passive) acoustic radiators 107 on the (cylindrical) surface of the main body 106 and/or at the one or more face sides of the main body 106.

The docking station 100 may comprise one or more base feet 105, 111, notably a base foot 105 at a front side facing the user and/or a rear foot 111 at a rear side of the docking station 100. The one or more base feet 105, 111 may be attached to the main body 106, and may extend from the main body 106 towards the ground 160, onto which the docking station 100 is placed. The one or more base feet 105, 111 may extend along the longitudinal axis of the (cylindrical) main body 106. In particular, the feet 105, 111 may have the form of a plate or plane. As such the feet 105, 111 may be referred to herein as foot plates.

The one or more base feet 105, 111 may each comprise an isolator element 109, e.g., comprising silicone, at the end of the respective foot 105, 111, which is in contact with the ground 160 that the docking station 100 is placed on. The use of an isolator element 109 allows the docking station 100 to be placed in a stable manner, preventing it from sliding over the surface that the docking station 100 is placed on (notably in case of touch interaction with the docking station 100 and/or when audio is played back). Furthermore, the docking station 100 may be isolated against (acoustic) vibrations.

In addition, the docking station 100 may comprise a holder, notably a back support, 102 which extends from the main body 106 upwards (i.e., away from the ground 160 that the docking station 100 is placed on). The back support 102 may exhibit an angle with regards to the ground 160 between 45° and 75°, when the docking station 100 is placed on the ground 160. The back support 102 may be designed as a support for a typical tablet PC (e.g., with a screen size between 8 inches and 13 inches), also being able to support smaller devices such as phones starting at 5 inches. The back support 102 may extend along the longitudinal axis of the main body 106 (from one face to the other face of the main body 106).

The back support 102 may exhibit one or more isolator stripes 101 which may extend horizontally across the back support 102, or may have at least two support pads. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of acoustic vibrations may be provided.

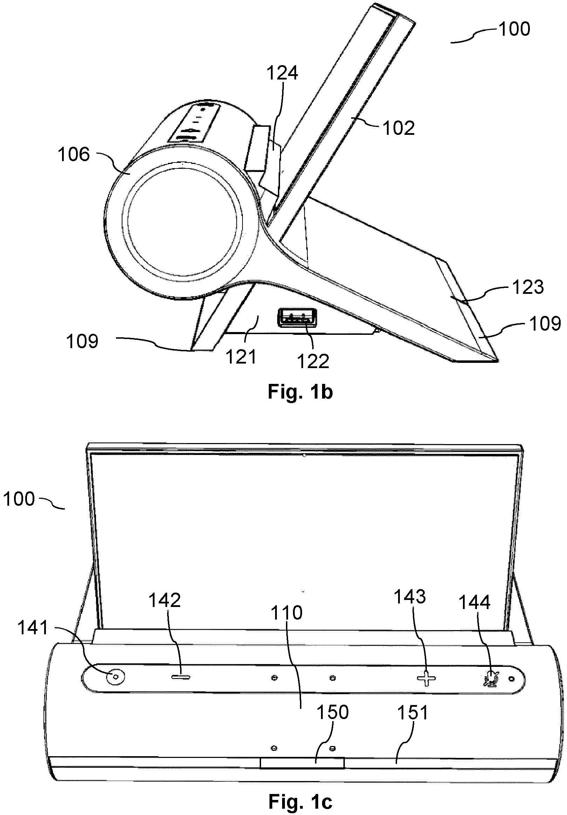

In addition, the docking station 100 may comprise a base support 124, as shown in Fig. 1b, which is located at the contact point between the main body 106 and the back support 102. The base support 124 may form a gap within which the lower edge of a user device, notably of a tablet PC, may be placed, in order to hold the user device in a stable manner on the back support 102. The base support 124 may comprise an isolating material, in order to allow vibrations of the docking station 100 (e.g., due to rending of an audio signal via a loudspeaker 108 of the docking station 100) to be isolated. Alternatively, or in addition, the base support 124 may comprise one or more presence sensors (e.g., weight sensors) for detecting the presence of a user device on the back support 102.

The control unit 120 of the docking station 100 may be configured to automatically establish a communication link with the user device, if it is determined that the user device has been placed in conjunction with, notably into the holder 102 of, the docking station 100. By way of example, a wireless communication link, such as a Bluetooth link, may be established between the docking station 100 and the user device.

Furthermore, the control unit 120 may be configured to receive an audio signal from the user device via the communication link, and to cause one or more speaker drivers 107, 108 of the docking station 100 to render the audio signal that has been received from the user device. Alternatively, or in addition, the control unit 120 may be configured to control the user device via the communication link (e.g., using gesture control and/or speech control).

The docking station 100 may comprise one or more microphones 110, e.g., at the main body 106, which are configured to capture acoustic microphone signals, notably speech signals, e.g., in order to enable speech control of the docking station 100 and/or of a user device (also referred to herein as electronic device) that is coupled with the docking station 100. The docking station 100, notably the control unit 120 of the docking station 100, may be configured to separate an audio signal that has been emitted by the docking station 100 from an acoustic microphone signal that has been captured by the one or more microphones 110 of the docking station 100, thereby enabling a reliable speech control, even when rendering an audio signal. The one or more microphones 110 may be oriented away from the one or more speakers 108 and/or the one or more radiators 107, for enabling a particularly reliable separation of an emitted audio signal from a captured microphone signal.

Figure 1b shows a side view of the docking station 100. The docking station 100 may comprise an electronics housing 121 for one or more electronic components (e.g., for the control unit 120). The housing 121 may be located between the front foot 105 and the rear foot 111 of the docking station 100. Furthermore, the docking station 100 may comprise a data and/or power interface 122 (e.g., a USB interface) for data communication and/or for power supply (e.g., at the housing 121). In addition, the docking station 100 may comprise a section 123 for placing a power cord for a power supply of the docking station 100.

Figure 1c shows a front view of the docking station 100. The main body 106 of the docking station 100 may comprise various different control elements 141, 142, 143, 144 such as a control button 141 for activating or deactivating a virtual assistant, volume buttons 142, 143 and/or an on/off-button 144 for activating and for deactivating the one or more microphones 110.

The docking station 100 is typically dedicated for the use within a kitchen. The docking station 100 may be used in conjunction with a smartphone and/or tablet PC which is placed on the back support 102 of the docking station 100. Furthermore, the docking station 100 may be configured to act standalone as a smart speaker, e.g., for rendering audio signals that are provided by an internet server and/or by a smartphone and/or tablet PC. In the present document different means for increasing the robustness and/or the stability of a docking station 100 are described.

In particular, a multipurpose metal bracket for a docking station 100 is described, which provides structural integrity for the one or more components inside the housing 121 of the docking station 100. Furthermore, the metal bracket provides one or more additional functionalities such as heat dissipation, counterweight, electromagnetic shielding of one or more sensitive components and/or beamforming of a Bluetooth signal into one direction (in order to ensure that the main Bluetooth signal is received by a user device which is docked to the docking station 100, and is not received by another user device in the neighborhood of the docking station 100. Hence, the metal bracket may not only act as an EMI (electromagnetic interference) and/or EMC (electromagnetic compatibility) shield, but also as a counterweight, as a heat sink and/or as an internal stabilization structure. Furthermore, the metal bracket may allow reducing the number of parts of the docking station 100, thereby reducing the cost of the docking station 100.

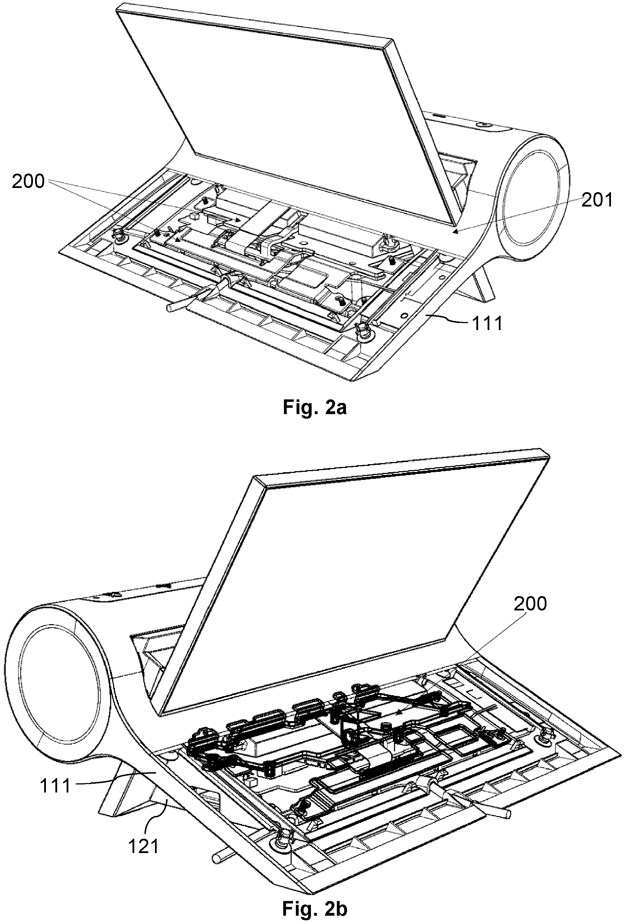

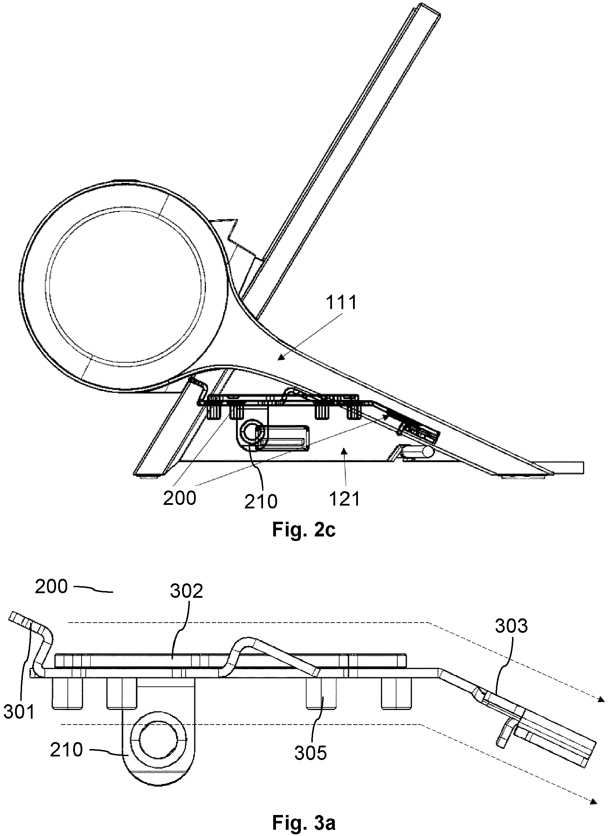

Figs. 2a to 2c show different views of a docking station 100 comprising a metal bracket 200, wherein the metal bracket 200 is located within the electronics housing 121 of the docking station 100, extending along the rear foot 111 of the docking station 100. As shown in Fig. 1b, the electronics housing 121 may be located below the (panel-shaped) front foot 105 and the (panel-shaped) rear foot 111 of the docking station 100. In particular, the front foot 105 and/or the rear foot 111 may each form a wall of the electronics housing 121. The electronics housing 121 may therefore have a triangular shape. The base of the triangular shaped housing 121 may be parallel to the ground 160 that the docking station 100 is standing on. The front foot 105 may form a first side and the rear foot 111 may form a second side of the triangular shaped housing 121.

The docking station 100 may be designed such that the (cylindrical) main body 106 is attached to the rear foot 111, forming an extension of the rear foot 111 towards the front of the docking station 100. The rear foot 111 may extend away from the main body 106 in a radial direction with respect to the longitudinal axis of the main body 106. The metal bracket 200 may extend in the same radial direction as the rear foot 111, starting at a transition point 201 between the main body 106 and the rear foot 111.

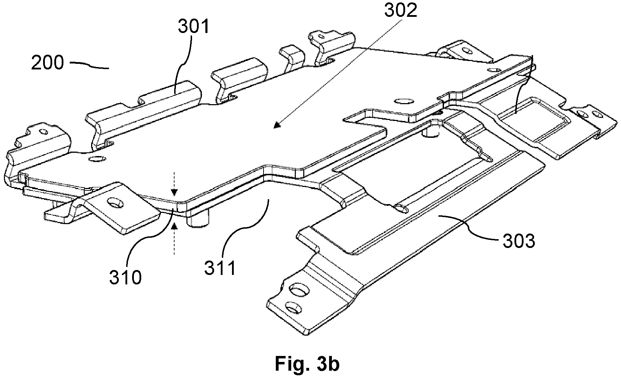

Figs. 3a and 3b show different views of the metal bracket 200, in particular a side view (perpendicular to the longitudinal axis of the main body 106) and a perspective view, respectively. The metal bracket 200 comprises at a front end (facing the front of the docking station 100) a front section 301. The front section 301 may be used to attach the metal bracket 200 to the front foot 105 of the docking station 100. Furthermore, the metal bracket 200 comprises a rear section 303 at a rear end (facing towards the back of the docking station 100) of the docking station 100, which may be used to attach the metal bracket 200 to the rear foot 111 of the docking station 100. The rear section 300 of the metal bracket 200 may be aligned and/or may be parallel to the rear foot 111, thereby allowing the metal bracket 200 to be integrated into the docking station 100 in an efficient and compact manner. Furthermore, this allows the stability of the docking station 100 to be improved.

The metal bracket 200 comprises a middle section 302 in between the front section 301 and the rear section 303. The middle section 302 may be oriented in parallel to the ground 160 that the docking station 100 is standing on. The middle section 302 preferably has a relatively large surface for placing one or more components (notably an electronics board) of the docking station 100. Furthermore, the middle section 302 may have a relatively high thickness, e.g., 3mm or more, or 5mm or more, in order to provide a relatively high stability and in order to provide a substantial heat sink.

The middle section 302 may comprise one or more bolts 305, which may be used to fix the metal bracket 200 to the housing 121 of the docking station 100 and/or to fix the electronics board of the docking station 100 to the metal bracket 200. Alternatively, or in addition, the middle section 302 may comprise a guiding element 210 for the power plug of the docking station 100. The guiding element 210 may extend (perpendicularly) away from the middle section 302 towards the ground 160. Furthermore, the guiding element 210 may comprise a hole, within which the power plug may be placed. The section which surrounds the hole may have a blocking function for the power plug, preventing the power plug from being pushed too far into the power socket of the docking station 100, thereby increasing the robustness of the docking station 100.

The metal bracket 200 may exhibit an opening 311, e.g., within the middle section 302 and/or the rear section 303. The opening 311 may have the function of a beamformer, for orienting the signal of a Bluetooth transceiver (on the electronics board) along a vertical axis (perpendicular to ground). As a result of this, the selectivity of the Bluetooth transceiver for selectively coupling with user devices which are placed on the back support 102 of the docking station 100 may be improved.

The metal bracket 200 may have the function to shield and protect the electronic components inside the electronics housing 121 from EMI, EMC, RFI (radio frequency interference), etc. For this purpose, the electronic components may be located below the middle section 302 of the bracket 200, such that the (planer) middle section 302 acts as a shield with respect to interferences above the electronics housing 121.

The metal bracket 200 preferably follows the shape and form of the docking station 100, thereby improving the internal stability and thereby allowing other internal components to be mounted in a stable manner.

The metal bracket 200 may be designed as a counterweight to increase the overall mechanical stability of the docking station 100. In particular, the metal bracket 200 may be used to provide a docking station 100 which provides a stable stand for a user device that is placed on the back support 102 of the docking station 100. For this purpose, the middle section 302 of the metal bracket 200 may have a reliably high thickness 310, to balance the center of gravity when a user device is placed on the back support 102. As such, the metal bracket 200 may be designed as a counterweight for a user device that is placed on the back support 102 of the docking station 100.

As indicated above, the metal bracket 200, notably the middle section 302, may have a relatively large surface area which enables the bracket 200 to act as a heat sink during the operation of the docking station 100.

Hence, a multipurpose metal bracket 200 is described which is configured to beamform Bluetooth signals into the direction of a user device, which is placed on the back support 102 of the docking station 100, thereby providing an increased selectivity of the coupling between the docking station 100 and a user device. The metal bracket 200 may be configured to shield the sensitive electronic components of the docking station 100 from EMI, EMC or RFI. The relatively large surface area of (the middle section 302 of) the metal bracket 200 may act as a counterweight and may be used to position the center of gravity of the docking station 100 for increasing the stability when a user device is placed on the docking station 100. Furthermore, the metal bracket 200 may be used to improve the structural stability of the docking station 100, compared to a docking station 100 which only makes use of plastic parts. In addition, the metal bracket 200 may act as a heat sink, thereby preventing overheating of electrical and/or electronic components in a reliable and efficient manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An electronic device (100); wherein the electronic device (100) comprises
- a main body (106) with an acoustic chamber with one or more speaker drivers (108, 107) for rendering an audio signal;
- a panel-shaped front foot (105) which extends downwards from the main body (106) at a front side of the electronic device (100);
- a panel-shaped rear foot (111) which extends downwards from the main body (106) at a rear side of the electronic device (100);
- an electronics housing (121) which is located below the panel-shaped front foot (105) and the panel-shaped rear foot (111), such that the panel-shaped front foot (105) and the panel-shaped rear foot (111) form a roof for the electronics housing (121);
- a metal bracket (200) which is located within the electronics housing (121); and
- an electronics board which is attached to the metal bracket (200).

2. The electronic device (100) according to claim 1, wherein the metal bracket (200) comprises
- a front section (301) for attaching the metal bracket (200) to the front foot (105);
- a middle section (302) to which the electronics board is attached; and
- a rear section (303) for attaching the metal bracket (200) to the rear foot (111).

3. The electronic device (100) according to claim 2, wherein
- the middle section (302) is oriented in parallel to a ground (160) that the electronic device (100) is standing on; and
- the rear section (303) is oriented in parallel to the rear foot (111).

4. The electronic device (100) according to any previous claim, wherein the metal bracket (200), in particular a middle section (302) of the metal bracket (200), to which the electronics board is attached, is configured to act as a heat sink for heat generated by the electronics board during operation of the electronic device (100).

5. The electronic device (100) according to any previous claim, wherein the metal bracket (200), in particular a middle section (302) of the metal bracket (200), to which the electronics board is attached, has a material thickness (310) of 2mm or more, or of 4mm or more.

6. The electronic device (100) according to any previous claim, wherein the metal bracket (200), in particular a middle section (302) of the metal bracket (200), to which the electronics board is attached, is configured to act as a shield for electromagnetic and/or radio frequency interference for one or more electronic components on the electronics board.

7. The electronic device (100) according to any previous claim, wherein the electronics board is attached to a lower side of the metal bracket (200), in particular to a lower side of a middle section (302) of the metal bracket (200), such that the electronics board is located between the metal bracket (200) and a ground (160) that the electronic device (100) is standing on.

8. The electronic device (100) according to claim 7, wherein
- the electronics board comprises a transceiver configured to establish a wireless communication link with a user device, which is placed above the roof of electronics housing (121); and
- the metal bracket (200), in particular the middle section (302) of the metal bracket (200), comprises an opening (311) for the transceiver, that allows a wireless communication signal which is transmitted by the transceiver to traverse the opening (311) of the metal bracket (200) towards the roof of the electronics housing (121).

9. The electronic device (100) according to any previous claim, wherein
- the metal bracket (200), in particular a middle section (302) of the metal bracket (200), to which the electronics board is attached, comprises a guiding element (210) which extends perpendicularly away from a surface of the metal bracket (100), in particular from a surface of the middle section (302) of the metal bracket (200);
- the guiding element (210) comprises a hole for a power plug of the electronic device (100); and
- the guiding element (210) is configured to block a power plug from being pushed too far into a power socket of the electronic device (100).

10. The electronic device (100) according to any previous claim, wherein
- the electronic device (100) comprises a holder (102), notably a back support, extending upwards from the main body (106) and enabling a handheld user device to be placed onto the electronic device (100);
- the holder (102), in particular the back support, forms a support angle, notably a support angle between 45° and 70°, with respect to the ground (160) that the electronic device (100) is standing on;
- the electronics board comprises a transceiver configured to establish a wireless communication link with a user device, which is placed on the electronic device (100); and
- the metal bracket (200) is configured to perform beamforming for a wireless communication signal which is transmitted by the transceiver into a direction towards the back support (102) and/or towards the roof of the electronics housing (121).

11. The electronic device (100) according to any previous claim, wherein
- the electronic device (100) comprises a back support (102) extending upwards from the main body (106) and enabling a handheld user device to be placed onto the electronic device (100);
- a center of gravity of the back support (102) is positioned at a gravity point; and
- the metal bracket (200) is such that a higher fraction of a total weight of the metal bracket (200) is located between a front side of the electronic device (100) and the gravity point, than between a rear side of the electronic device (100) and the gravity point.

12. The electronic device (100) according to any previous claim, wherein
- the metal bracket (200) is configured to lower a center of gravity of the electronic device (100) towards a ground (160) that the electronic device (100) is standing on, compared to an electronic device (100) which does not comprise the metal bracket (200); and/or
- the metal bracket (200) has a weight of 200g or more, or of 400g or more.

13. The electronic device (100) according to any previous claim, wherein
- the main body (106) has a cylindrical form and extends along a longitudinal axis from a first face to a second face;
- the longitudinal axis of the main body (106) is parallel to a ground (106) that the electronic device (100) is standing on;
- the rear foot (111) forms a plane that has a total length along the longitudinal axis, extending from the first face to the second face; and
- the metal bracket (200) forms a surface which has a length along the longitudinal axis of 80% or more of the total length.

14. The electronic device (100) according to any previous claim, wherein
- the metal bracket (200) forms a metallic surface which extends from the front foot (105) to the rear foot (111); and/or
- the metal bracket (200) is configured to provide a mechanical stability to the electronic device (100).

15. The electronic device (100) according to any previous claim, wherein
- the rear foot (111) forms an angle between 20° and 45° with a ground (160) that the electronic device (100) is standing on; and
- the front foot (105) forms an angle between 45° and 85° with the ground (160).

## Amended claims

### Amended claims in accordance with Rule 137(2) EPC.

1. An electronic device (100); wherein the electronic device (100) comprises
- a main body (106) with an acoustic chamber with one or more speaker drivers (108, 107) for rendering an audio signal;
- a panel-shaped front foot (105) which extends downwards from the main body (106) at a front side of the electronic device (100);
- a panel-shaped rear foot (111) which extends downwards from the main body (106) at a rear side of the electronic device (100);
- an electronics housing (121) which is located below the panel-shaped front foot (105) and the panel-shaped rear foot (111), such that the panel-shaped front foot (105) and the panel-shaped rear foot (111) form a roof for the electronics housing (121);
- a metal bracket (200) which is located within the electronics housing (121);
- a holder (102), notably a back support, extending upwards from the main body (106) and enabling a handheld user device to be placed onto the electronic device (100); and
- an electronics board which is attached to the metal bracket (200); wherein the electronics board is attached to a lower side of the metal bracket (200), such that the electronics board is located between the metal bracket (200) and a ground (160) that the electronic device (100) is standing on; wherein the electronics board comprises a transceiver configured to establish a wireless communication link with a user device, which is placed in the holder (102) above the roof of electronics housing (121); and wherein the metal bracket (200) comprises an opening (311) for the transceiver, that allows a wireless communication signal which is transmitted by the transceiver to traverse the opening (311) of the metal bracket (200) towards the roof of the electronics housing (121).

2. The electronic device (100) according to claim 1, wherein the metal bracket (200) comprises
- a front section (301) for attaching the metal bracket (200) to the front foot (105);
- a middle section (302) to which the electronics board is attached; and
- a rear section (303) for attaching the metal bracket (200) to the rear foot (111).

3. The electronic device (100) according to claim 2, wherein
- the middle section (302) is oriented in parallel to a ground (160) that the electronic device (100) is standing on; and
- the rear section (303) is oriented in parallel to the rear foot (111).

4. The electronic device (100) according to any previous claim, wherein the metal bracket (200), in particular a middle section (302) of the metal bracket (200), to which the electronics board is attached, is configured to act as a heat sink for heat generated by the electronics board during operation of the electronic device (100).

5. The electronic device (100) according to any previous claim, wherein the metal bracket (200), in particular a middle section (302) of the metal bracket (200), to which the electronics board is attached, has a material thickness (310) of 2mm or more, or of 4mm or more.

6. The electronic device (100) according to any previous claim, wherein the metal bracket (200), in particular a middle section (302) of the metal bracket (200), to which the electronics board is attached, is configured to act as a shield for electromagnetic and/or radio frequency interference for one or more electronic components on the electronics board.

7. The electronic device (100) according to any previous claim, wherein the electronics board is attached to a lower side of a middle section (302) of the metal bracket (200); and wherein the middle section (302) of the metal bracket (200) comprises the opening (311) for the transceiver.

8. The electronic device (100) according to any previous claim, wherein
- the metal bracket (200), in particular a middle section (302) of the metal bracket (200), to which the electronics board is attached, comprises a guiding element (210) which extends perpendicularly away from a surface of the metal bracket (100), in particular from a surface of the middle section (302) of the metal bracket (200);
- the guiding element (210) comprises a hole for a power plug of the electronic device (100); and
- the guiding element (210) is configured to block a power plug from being pushed too far into a power socket of the electronic device (100).

9. The electronic device (100) according to any previous claim, wherein
- the holder (102), in particular the back support, forms a support angle, notably a support angle between 45° and 70°, with respect to the ground (160) that the electronic device (100) is standing on;
- the electronics board comprises a transceiver configured to establish a wireless communication link with a user device, which is placed on the electronic device (100); and
- the metal bracket (200) is configured to perform beamforming for a wireless communication signal which is transmitted by the transceiver into a direction towards the back support (102) and/or towards the roof of the electronics housing (121).

10. The electronic device (100) according to any previous claim, wherein
- the holder (102) is a back support (102);
- a center of gravity of the back support (102) is positioned at a gravity point; and
- the metal bracket (200) is such that a higher fraction of a total weight of the metal bracket (200) is located between a front side of the electronic device (100) and the gravity point, than between a rear side of the electronic device (100) and the gravity point.

11. The electronic device (100) according to any previous claim, wherein
- the metal bracket (200) is configured to lower a center of gravity of the electronic device (100) towards a ground (160) that the electronic device (100) is standing on, compared to an electronic device (100) which does not comprise the metal bracket (200); and/or
- the metal bracket (200) has a weight of 200g or more, or of 400g or more.

12. The electronic device (100) according to any previous claim, wherein
- the main body (106) has a cylindrical form and extends along a longitudinal axis from a first face to a second face;
- the longitudinal axis of the main body (106) is parallel to a ground (106) that the electronic device (100) is standing on;
- the rear foot (111) forms a plane that has a total length along the longitudinal axis, extending from the first face to the second face; and
- the metal bracket (200) forms a surface which has a length along the longitudinal axis of 80% or more of the total length.

13. The electronic device (100) according to any previous claim, wherein
- the metal bracket (200) forms a metallic surface which extends from the front foot (105) to the rear foot (111); and/or
- the metal bracket (200) is configured to provide a mechanical stability to the electronic device (100).

14. The electronic device (100) according to any previous claim, wherein
- the rear foot (111) forms an angle between 20° and 45° with a ground (160) that the electronic device (100) is standing on; and
- the front foot (105) forms an angle between 45° and 85° with the ground (160).
